# EUROPÄISCHE PATENTANMELDUNG

(11) **EP 4 134 264 A1**
(43) Veröffentlichungstag der Anmeldung: **15.02.2023**
(21) Anmeldenummer: 22189334.0
(22) Anmeldetag: 08.08.2022
(51) Int. Cl.: B60L 53/16, H01R 13/00

(54) **ELEKTRISCHE LADEVORRICHTUNG**

(30) Priorität: 13.08.2021 DE 102021121085
(71) Anmelder: Lisa Dräxlmaier GmbH, 84137 Vilsbiburg (DE)
(72) Erfinder: Schmittat, Lutz, 84137 Vilsbiburg (DE); Gschaider, Wolfgang, 84100 Niederaichbach (DE)

(57) **Zusammenfassung**

Die vorliegenden Erfindung betrifft eine elektrische Ladevorrichtung (100) eines elektrisch angetriebenen Fahrzeugs, mit einer Ladesteckdose (101), welche mit einem Ladestecker (137) einer externen Ladestation elektrisch verbindbar ist, um eine Batterie des elektrisch angetriebenen Fahrzeugs mit elektrischer Energie zu laden, wobei die Ladesteckdose (101) in einer Öffnung (103) einer Karosserie (105) des elektrisch angetriebenen Fahrzeugs angeordnet ist, einem Ladedeckel (107), welcher bewegbar gelagert an der Karosserie (105) befestigt und ausgebildet ist, die Öffnung (103) der Karosserie (105) zu verschließen, und zumindest einem Heizelement (113, 113-1, 113-2, 113-3, 113-4, 113-5), welches an dem Ladedeckel (107) angeordnet und ausgebildet ist den Ladedeckel (107) zu erwärmen.

## Beschreibung

### Technisches Gebiet

Die vorliegende Erfindung betrifft eine elektrische Ladevorrichtung eines elektrisch angetriebenen Fahrzeugs.

### Stand der Technik

Elektrische Ladevorrichtungen werden in einem herkömmlichen elektrisch angetriebenen Fahrzeug, wie z.B. in einem Batterie-elektrisch angetriebenen Fahrzeug, verwendet, um eine Batterie des elektrisch angetriebenen Fahrzeugs mit elektrischer Energie zu laden. Herkömmliche elektrische Ladevorrichtungen umfassen eine an dem Fahrzeug angeordnete Ladesteckdose, welche mit einem Ladestecker einer externen Ladestation elektrisch verbindbar ist, um den elektrischen Ladevorgang der Batterie des elektrisch angetriebenen Fahrzeugs durchzuführen.

Die Ladesteckdose ist üblicherweise in einer Öffnung einer Karosserie des elektrisch angetriebenen Fahrzeugs angeordnet, wobei die Öffnung üblicherweise durch einen an der Karosserie bewegbar gelagerten Ladedeckel verschlossen wird. Bei geringen Außentemperaturen besteht bei herkömmlichen elektrischen Ladevorrichtungen die Gefahr, dass der Ladedeckel an der Karosserie festfriert und sich nicht mehr öffnen lässt, wodurch dem Nutzer unter Umständen der Zugang zur Ladesteckdose verwehrt werden kann.

### Beschreibung der Erfindung

Es ist eine Aufgabe der vorliegenden Erfindung, eine elektrische Ladevorrichtung eines elektrisch angetriebenen Fahrzeugs bereitzustellen, wobei ein Festfrieren eines Ladedeckels der elektrischen Ladevorrichtung verhindert wird.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die vorliegende Erfindung beruht auf der Erkenntnis, dass der Ladedeckel der elektrischen Ladevorrichtung zumindest ein Heizelement aufweist, welches an dem Ladedeckel der elektrischen Ladevorrichtung angeordnet und ausgebildet ist, den Ladedeckel zu erwärmen. Durch das Erwärmen des Ladedeckels wird ein Festfrieren des Ladedeckels an der Karosserie verhindert, und der Nutzer kann den Ladedeckel auch bei geringen Außentemperaturen öffnen, um Zugang zu der Ladesteckdose zu erhalten.

Gemäß einem ersten Aspekt der Erfindung wird die Aufgabe durch eine elektrische Ladevorrichtung eines elektrisch angetriebenen Fahrzeugs gelöst, mit einer Ladesteckdose, welche mit einem Ladestecker einer externen Ladestation elektrisch verbindbar ist, um eine Batterie des elektrisch angetriebenen Fahrzeugs mit elektrischer Energie zu laden, wobei die Ladesteckdose in einer Öffnung einer Karosserie des elektrisch angetriebenen Fahrzeugs angeordnet ist, einem Ladedeckel, welcher bewegbar gelagert an der Karosserie befestigt und ausgebildet ist, die Öffnung der Karosserie zu verschließen, und zumindest einem Heizelement, welches an dem Ladedeckel angeordnet und ausgebildet ist den Ladedeckel zu erwärmen.

Dadurch wird der technische Vorteil erreicht, dass durch das Erwärmen des Ladedeckels durch das an dem Ladedeckel angeordneten Heizelement ein Festfrieren des Ladedeckels an der Karosserie verhindert wird. Somit kann der Nutzer des elektrisch angetriebenen Fahrzeugs den Ladedeckel auch bei geringen Außentemperaturen öffnen, um Zugang zu der Ladesteckdose zu erhalten und die Batterie des elektrisch angetriebenen Fahrzeugs mit elektrischer Energie zu laden.

Insbesondere kann das zumindest eine Heizelement in bereist vorhandene Elemente des Ladedeckels, wie z.B. Deckelinnenseite, Deckelverriegelung, Dichtung, etc., integriert werden, wodurch sich ein besonders kompakt strukturierter Ladedeckel ergibt.

Insbesondere ist das zumindest eine Heizelement als ein elektrisches Heizelement ausgebildet, welches insbesondere mit der Ladesteckdose und/oder mit einer elektrischen Energieversorgung des elektrisch angetriebenen Fahrzeugs elektrisch verbunden ist, um dem elektrischen Heizelement elektrische Energie zum Heizen zuzuführen. Insbesondere umfasst das zumindest eine elektrische Heizelement ein NTC-Heizelement und/oder ein PTC-Heizelement.

Insbesondere ist der Ladedeckel, welcher bewegbar gelagert, insbesondere drehbar und/oder schwenkbar gelagert, an der Karosserie befestigt ist, zwischen einer Öffnungsposition, in welcher der Ladedeckel die Öffnung verschließt, und einer Verschlussposition, in welcher der Ladedeckel die Öffnung freigibt, bewegbar.

Insbesondere kann der Ladedeckel ferner ein Lichtabgabeelement aufweisen, welches ausgebildet ist, eine wirksame Beleuchtung einer Umgebung der elektrischen Ladevorrichtung sicherzustellen, wobei hierbei insbesondere das zumindest eine Heizelement und das Lichtabgabeelement mit der Ladesteckdose und/oder mit einer elektrischen Energieversorgung des elektrisch angetriebenen Fahrzeugs verbunden sind.

Es ergibt sich somit die Möglichkeit der Bereitstellung eines kompakten Ladedeckels für die elektrische Ladevorrichtung mit einer Vielzahl von integrierten Funktionalitäten.

Insbesondere weist das zumindest eine Heizelement ein einziges Heizelement oder eine Mehrzahl von Heizelementen, insbesondere zwei, drei, vier, fünf, sechs, sieben, acht, neun oder zehn Heizelemente auf.

Insbesondere ist das zumindest eine Heizelement innerhalb des Ladedeckels oder an dem Ladedeckel angeordnet. Das Heizelement kann dabei voll oder teilumfänglich von einem Material umschlossen sein, d.h. insbesondere von Kunststoff umschlossen sein, wobei mindestens ein Teilbereich zur Kontaktierung verfügbar bleibt.

In einer Ausführungsform ist das zumindest eine Heizelement an einer der Ladesteckdose zugewandten Deckelinnenseite des Ladedeckels angeordnet, insbesondere aufgeklebt.

Dadurch wird der technische Vorteil erreicht, dass das an der Deckelinnenseite angeordnete Heizelement vorteilhaft vor äußeren Einflüssen geschützt ist, und zudem die Deckelaußenseite des Ladedeckels funktional und optisch nicht beeinträchtigt. Das an der Deckelinnenseite des Ladedeckels angeordnete zumindest eine Heizelement kann insbesondere eine Heizfolie und/oder eine Heizlitze umfassen.

In einer Ausführungsform ist das zumindest eine Heizelement innerhalb des Ladedeckels angeordnet, insbesondere mittig, und/oder in einem der Ladesteckdose zugewandten Bereich des Ladedeckels und/oder in einem der Ladesteckdose abgewandten Bereich des Ladedeckels.

Dadurch wird der technische Vorteil erreicht, dass die Anordnung des zumindest einen Heizelements innerhalb des Ladedeckels eine wirksame Einbindung des Heizelement in den Ladedeckel ermöglicht, so dass eine wirksame strukturelle Integration erreicht wird.

Durch die insbesondere Positionierung des zumindest einen Heizelements in dem der Ladesteckdose zugewandten Bereich und/oder dem der Ladesteckdose abgewandten Bereich (bzw. dem der Deckelaußenseite zugewandten Bereich) kann der zur Verhinderung des Einfrierens gewünschte beheizte Bereich des Ladedeckels wirksam gewählt werden. Durch eine insbesondere mittige Anordnung des zumindest einen Heizelements innerhalb des Ladedeckels kann eine gleichmäßige Erwärmung des gesamten Ladedeckels erreicht werden.

Das innerhalb des Ladedeckels angeordnete zumindest eine Heizelement kann insbesondere eine Heizfolie und/oder eine Heizlitze und/oder ein elektrisch leitfähiges Kunststoffmaterial umfassen.

In einer Ausführungsform weist die elektrische Ladevorrichtung einen Temperatursensor auf, welcher ausgebildet ist, eine Temperatur des Ladedeckel zu erfassen, wobei der Temperatursensor steuerungstechnisch mit einer Steuerung des elektrisch angetriebenen Fahrzeugs, insbesondere mit einer Steuerung der elektrischen Ladevorrichtung, verbunden ist, wobei die Steuerung steuerungstechnisch mit dem zumindest einen Heizelement verbunden und ausgebildet ist, das zumindest eine Heizelement zum Erwärmen des Ladedeckels in Abhängigkeit der erfassten Temperatur zu aktivieren.

Dadurch wird der technische Vorteil erreicht, dass das Heizelement nur dann aktiviert wird, wenn aufgrund einer niedrigen Außentemperatur überhaupt die Gefahr des Einfrierens des Ladedeckels besteht. Somit kann durch ein Temperatur-abhängiges Steuern der Aktivierung des Heizelements ein unnötiger Mehrenergieverbrauch verhindert werden.

Insbesondere ist die Steuerung ausgebildet, das zumindest eine Heizelement zum Erwärmen des Ladedeckels zu aktivieren, wenn die durch den Temperatursensor erfasste Temperatur einen Temperaturschwellenwert unterschreitet. Insbesondere kann der Temperaturschwellenwert 6 °C, 4 °C, 2 °C oder 0 °C betragen.

In einer Ausführungsform ist das zumindest eine Heizelement als ein elektrisches Heizelement ausgebildet, wobei das elektrische Heizelement mit einer elektrischen Energieversorgung des elektrisch angetriebenen Fahrzeugs, durch eine elektrische Energieverbindung zum Bereitstellen von elektrischer Energie elektrisch verbunden ist, wobei die elektrische Energieverbindung insbesondere entlang eines Scharnierabschnitts des Ladedeckels und/oder zumindest abschnittsweise zwischen dem elektrisches Heizelement und der Ladesteckdose geführt ist.

Dadurch wird der technische Vorteil erreicht, dass das zumindest eine elektrische Heizelement eine wirksame Erwärmung des Ladedeckels sicherstellt.

Die elektrische Energieverbindung umfasst hierbei insbesondere eine Stromleitung, welche von dem Ladedeckel in das elektrisch angetriebene Fahrzeug geführt ist, um das elektrische Heizelement mit der elektrischen Energieversorgung des elektrisch angetriebenen Fahrzeugs zu verbinden.

Der Scharnierabschnitt ist hierbei der Abschnitt des Ladedeckels, welcher einen die Öffnung der Karosserie verschließenden Verschlussabschnitt des Ladedeckels mit der Karosserie verbindet. Der Scharnierabschnitt ist hierbei bewegbar, insbesondere schwenkbar und/oder drehbar, an der Karosserie befestigt. Hierbei kann die elektrische Energieverbindung entlang des Scharnierabschnitts des Ladedeckels wirksam zu der Karosserie geführt und mit der elektrischen Energieversorgung des elektrisch angetriebenen Fahrzeugs verbunden werden.

Alternativ oder zusätzlich ist es auch möglich die elektrische Energieverbindung des zumindest einen Heizelements zu der Ladesteckdose zu führen, um den an der Ladesteckdose bereits vorliegenden elektrischen Anschluss auch zur Energieversorgung des Heizelements zu nutzen.

Insbesondere verbindet hierbei ein erster Verbindungsabschnitt der elektrischen Energieverbindung das zumindest eine Heizelement mit der Ladesteckdose elektrisch und verbindet hierbei ein zweiter Verbindungsabschnitt der elektrischen Energieverbindung die Ladesteckdose mit der elektrischen Energieversorgung des elektrisch angetriebenen Fahrzeugs.

In einer Ausführungsform weist das zumindest eine Heizelement ein Trägermaterial und einen Heizkörper, insbesondere Heizdraht oder Heizfolie, auf, welcher mit dem Trägermaterial verbunden ist, wobei der Heizkörper insbesondere in dem Trägermaterial eingebettet oder auf dem Trägermaterial angeordnet, insbesondere aufgeklebt, ist.

Dadurch wird der technische Vorteil erreicht, dass eine wirksame strukturelle Verbindung zwischen Trägermaterial und Heizkörper möglich ist. Durch die insbesondere durchgeführte Einbettung des Heizkörpers wird eine wirksame strukturelle Integration des Heizkörpers innerhalb des Trägermaterials sichergestellt. Durch die insbesondere durchgeführte Anordnung, insbesondere das Aufkleben des Heizkörpers auf dem Trägermaterial wird eine besonders einfach durchzuführende Anbringung des Heizkörpers auf dem Trägermaterial sichergestellt.

Insbesondere umfasst die Heizfolie Heiztinte, welche auf eine Trägerstruktur aufgedruckt ist.

In einer Ausführungsform umfasst das zumindest eine Heizelement ein elektrisch leitfähiges Kunststoffmaterial, welches ein elektrisch nichtleitfähiges Kunststoffträgermaterial aufweist, in welches elektrisch leitfähige Partikel eingebracht sind.

Dadurch wird der technische Vorteil erreicht, dass ein vorteilhaftes integrales Heizelement erhalten wird, welches besonders einfach zu fertigen ist, insbesondere als ein Kunststoffspritzgussteil. Insbesondere erfolgt die elektrische Kontaktierung des elektrisch leitfähigen Kunststoffmaterials durch Kontaktelemente, welche in das elektrisch leitfähige Kunststoffmaterial eingebettet sind. Zur Optimierung des Wärmeflusses und zur Erhöhung der Effizienz kann das Heizelement parallel oder nicht parallel zueinander mäandrierend durch den Heizbereich gelegt werden.

In einer Ausführungsform weist der Ladedeckel einen Scharnierabschnitt auf, welcher bewegbar gelagert, insbesondere drehbar und/oder schwenkbar gelagert, an der Karosserie befestigt ist, und wobei der Ladedeckel einen Verschlussabschnitt aufweist, welcher geformt ist, um die Öffnung zu verschließen, wobei das zumindest eine Heizelement insbesondere an dem Verschlussabschnitt und/oder an dem Scharnierabschnitt angeordnet ist.

Dadurch wird der technische Vorteil erreicht, dass der Scharnierabschnitt ein vorteilhaftes Öffnen, bzw. Schließen des Ladedeckels zulässt. Durch das Anordnen des zumindest einen Heizelements insbesondere an dem Verschlussabschnitt und/oder an dem Scharnierabschnitt kann eine vorteilhafte, insbesondere gezielte Erwärmung der entsprechenden Bereiche des Ladedeckels sichergestellt werden.

In einer Ausführungsform ist der Scharnierabschnitt durch eine Scharnieröffnung der Karosserie geführt, wobei das zumindest eine Heizelement insbesondere an dem Scharnierabschnitt in der Nähe der Scharnieröffnung angeordnet ist.

Dadurch wird der technische Vorteil erreicht, dass die Scharnieröffnung der Karosserie beim Öffnen, bzw. Schließen des Ladedeckels eine wirksame Bewegung des Scharnierabschnitts durch die Scharnieröffnung der Karosserie zulässt.

Insbesondere weist der Scharnierabschnitt einen mit der Karosserie verbundenen Befestigungsbereich, insbesondere einen geraden Befestigungsbereich, auf, und weist der Scharnierabschnitt einen gekrümmten Verbindungsbereich auf, welcher den Befestigungsbereich mit einem Verschlussabschnitt des Ladedeckels verbindet. Hierbei ist insbesondere der gekrümmte Verbindungsbereich durch die Scharnieröffnung der Karosserie geführt. Hierbei ist insbesondere das zumindest eine Heizelement an dem gekrümmten Verbindungsbereich des Scharnierabschnitts, insbesondere in der Nähe der Scharnieröffnung angeordnet.

Insbesondere weist das zumindest eine Heizelement eine durch einen Außenbereich abgegrenzte Heizelementöffnung auf, wobei der Außenbereich insbesondere an der Scharnieröffnung anliegt, und wobei insbesondere der Scharnierabschnitt, insbesondere der gekrümmte Verbindungsbereich durch die Heizelementöffnung geführt ist. Insbesondere weist das zumindest eine Heizelement eine U-Form auf.

In einer Ausführungsform weist die elektrische Ladevorrichtung ein Dichtelement auf, welches an einer der Ladesteckdose zugewandten Deckelinnenseite des Ladedeckels angeordnet, insbesondere aufgeklebt, ist, um eine wirksame Abdichtung zwischen dem Ladedeckel und der Karosserie sicherzustellen, wobei insbesondere das zumindest eine Heizelement an dem Dichtelement angeordnet ist.

Dadurch wird der technische Vorteil erreicht, dass das an dem Ladedeckel angeordnete Dichtelement eine wirksame fluidtechnische Abdichtung zwischen dem Ladedeckel und der Karosserie sicherstellt, so dass beispielsweise das Vordringen von Feuchtigkeit zu der Ladesteckdose verhindert wird.

Durch das Anordnen des zumindest einen Heizelements insbesondere an dem Dichtelement kann eine wirksame strukturelle Integration des zumindest einen Heizelements in das Dichtelement erreicht werden. Das zumindest eine Heizelement kann hierbei das Dichtelement erwärmen und verhindert dadurch ein Festfrieren des Dichtelements an der Karosserie.

Insbesondere ist das Dichtelement als ein die Deckelinnenseite des Ladedeckels zumindest abschnittsweise, insbesondere vollständig umlaufendes Dichtelement ausgebildet, wobei das an dem Dichtelement angeordnete zumindest eine Heizelement als ein die Deckelinnenseite des Ladedeckels zumindest abschnittsweise, insbesondere vollständig umlaufendes Heizelement ausgebildet.

Insbesondere ist das zumindest eine Heizelement innerhalb des Dichtelements angeordnet oder ist das zumindest eine Heizelement zumindest abschnittsweise durch das Dichtelement umschlossen.

Insbesondere weist das Dichtelement eine die Deckelinnenseite des Ladedeckels zumindest abschnittsweise, insbesondere vollständig umlaufende Dichtlippe auf, wobei das zumindest eine Heizelement an oder in der Dichtlippe angeordnet ist.

In einer Ausführungsform weist die elektrische Ladevorrichtung eine Deckelverriegelung auf, welche an einer der Ladesteckdose zugewandten Deckelinnenseite des Ladedeckels angeordnet und ausgebildet ist, den Ladedeckel im geschlossenen Zustand zu verriegeln, wobei insbesondere das zumindest eine Heizelement an der Deckelverriegelung angeordnet ist.

Dadurch wird der technische Vorteil erreicht, dass die Deckelverriegelung den Ladedeckel verriegeln kann, um Unbefugten keinen Zugriff auf die Ladesteckdose zu ermöglichen. Das an der Deckelverriegelung angeordnete zumindest eine Heizelement verhindert durch ein Erwärmen der Deckelverriegelung ein Einfrieren der Deckelverriegelung bei kalten Außentemperaturen.

Die an der Deckelinnenseite des Ladedeckels angeordnete Deckelverriegelung ist insbesondere mit einer an der Karosserie angeordneten Verriegelungsaufnahme verbindbar, um eine wirksame Verriegelung des Ladedeckels zu erreichen.

In einer Ausführungsform umfasst die elektrische Ladevorrichtung ferner ein Lichtabgabeelement, welches an dem Ladedeckel angeordnet und ausgebildet ist, eine wirksame Beleuchtung einer Umgebung der elektrischen Ladevorrichtung sicherzustellen.

Dadurch wird der technische Vorteil erreicht, dass eine wirksame Beleuchtung der Umgebung der elektrischen Ladevorrichtung ermöglicht wird.

Insbesondere ist das Lichtabgabeelement ausgebildet, in einer Öffnungsposition des Ladedeckels die elektrische Ladevorrichtung, insbesondere die Ladesteckdose, die Karosserie und/oder einen Boden, auf dem das elektrisch angetriebene Fahrzeug steht, zu beleuchten, insbesondere ausschließlich in der Öffnungsposition des Ladedeckels zu beleuchten.

Somit kann in der Öffnungsposition des Ladedeckels das Lichtabgabeelement insbesondere durch einen mechanischen Schalter und/oder elektronisch zum Beleuchten der Umgebung der elektrischen Ladevorrichtung aktiviert werden.

Insbesondere ist das Lichtabgabeelement an einem Verschlussabschnitt und/oder an einem Scharnierabschnitt des Ladedeckels angeordnet. Insbesondere ist der Verschlussabschnitt als ein plattenförmiges Element ausgebildet, um die Öffnung zu verschließen. Insbesondere ist der Scharnierabschnitt als ein zumindest abschnittsweise gekrümmter Scharnierabschnitt ausgebildet, um die bewegbare Lagerung des Ladedeckels sicherzustellen.

In einer Ausführungsform sind das Lichtabgabeelement und das zumindest eine Heizelement mit einer Steuerung des elektrisch angetriebenen Fahrzeugs, insbesondere mit einer Steuerung der elektrischen Ladevorrichtung, steuerungstechnisch verbindbar, wobei die Steuerung insbesondere ausgebildet ist, das Lichtabgabeelement in Abhängigkeit der Aktivierung des Heizelements zu steuern.

Dadurch wird der technische Vorteil erreicht, dass dem Nutzer des Fahrzeugs durch die Aktivierung des Lichtabgabeelements visuell mitgeteilt werden kann, ob das Heizelement aktiviert ist oder nicht.

Beispielsweise kann das Lichtabgabeelement zur Emission von Licht mit einer ersten Wellenlänge, insbesondere von blauem Licht, aktiviert werden, wenn das Heizelement nicht aktiviert ist. Beispielsweise kann das Lichtabgabeelement zur Emission von Licht mit einer zweiten Wellenlänge, insbesondere von rotem Licht, aktiviert werden, wenn das Heizelement aktiviert ist.

In einer Ausführungsform umfasst das Lichtabgabeelement einen Lichtauskoppelbereich, welcher an dem Ladedeckel, insbesondere an dem Verschlussabschnitt, angeordnet ist, wobei der Lichtauskoppelbereich durch einen Lichtleiter mit einer Lichtquelle lichtleitend verbunden ist, um von der Lichtquelle emittiertes Licht durch den Lichtleiter zu dem Lichtauskoppelbereich zu leiten, wobei der Lichtauskoppelbereich ausgebildet ist, die Umgebung der elektrischen Ladevorrichtung, insbesondere die Ladesteckdose, zu beleuchten.

Dadurch wird der technische Vorteil erreicht, dass durch die Verwendung des Lichtauskoppelbereichs, welcher mit einem Lichtleiter mit einer Lichtquelle lichtleitend verbunden ist, die Lichtquelle von dem Lichtauskoppelbereich beabstandet sein kann, so dass die Position der Lichtquelle hinsichtlich einer vorteilhaften Anbindung an eine Energieversorgung optimiert werden kann, und dass die Position des an dem Ladedeckel angeordneten Lichtauskoppelbereichs hinsichtlich einer besonders effektiven Beleuchtung optimiert werden kann.

Insbesondere ist die Lichtquelle außerhalb des Ladedeckels oder in einem Randbereich des Ladedeckels angeordnet und der Lichtleiter verbindet die außerhalb des Ladedeckels angeordnete oder in einem Randbereich des Ladedeckels angeordnete Lichtquelle mit dem an dem Ladedeckel angeordneten Lichtauskoppelbereich.

Insbesondere ist die Lichtquelle an oder in dem Ladedeckel angeordnet und der Lichtleiter verbindet die in oder an dem Ladedeckel angeordnete Lichtquelle mit dem an dem Ladedeckel angeordneten Lichtauskoppelbereich.

In einer Ausführungsform sind das Lichtabgabeelement, insbesondere der Lichtauskoppelbereich, und das zumindest eine Heizelement einstückig ausgebildet.

Dadurch wird der technische Vorteil erreicht, dass eine besonders kompakte strukturelle Einheit aus Lichtauskoppelbereich und Heizelement sichergestellt wird.

### Kurze Figurenbeschreibung

Nachfolgend werden vorteilhafte Ausführungsbeispiele der Erfindung unter Bezugnahme auf die begleitenden Figuren erläutert. Es zeigen:
- Fig. 1: eine schematische Darstellung einer elektrischen Ladevorrichtung gemäß einem ersten Ausführungsbeispiel;
- Fig. 2: eine schematische Darstellung eines an der Deckelinnenseite des Ladedeckels der in Fig. 1 dargestellten elektrischen Ladevorrichtung angeordneten ersten Heizelements;
- Fig. 3: eine schematische Darstellung eines an einer Deckelinnenseite des Ladedeckels der in Fig. 1 dargestellten elektrischen Ladevorrichtung angeordneten zweiten Heizelements;
- Fig. 4: eine schematische Darstellung eines an einer Deckelinnenseite des Ladedeckels der in Fig. 1 dargestellten elektrischen Ladevorrichtung angeordneten zweiten Heizelements gemäß einem weiteren Ausführungsbeispiel;
- Fig. 5: eine schematische Darstellung eines an einer Deckelinnenseite des Ladedeckels der in Fig. 1 dargestellten elektrischen Ladevorrichtung angeordneten dritten Heizelements;
- Figs. 6A-B: alternative Darstellungen des in Fig. 5 dargestellten dritten Heizelements;
- Figs. 7A-D: schematische Darstellungen von Heizelementen einer elektrischen Ladevorrichtung gemäß weiterer Ausführungsbeispiele; und
- Fig. 8: eine schematische Darstellung von Heizelementen an einem Ladedeckel einer elektrischen Ladevorrichtung gemäß einem weiteren Ausführungsbeispiel.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

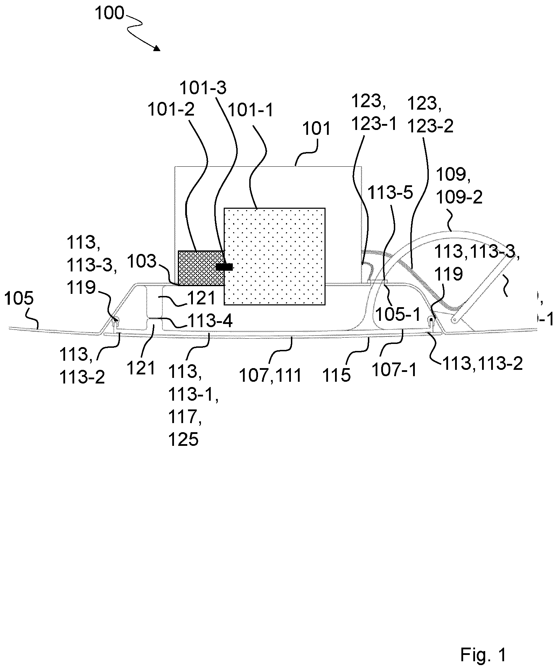

Fig. 1 zeigt eine schematische Darstellung einer elektrischen Ladevorrichtung 100 eines elektrisch angetriebenen Fahrzeugs gemäß einem ersten Ausführungsbeispiel.

Die in Fig. 1 dargestellte elektrischen Ladevorrichtung 100 ist Bestandteil eines elektrisch angetriebenen Fahrzeugs und ermöglicht einem Nutzer des elektrisch angetriebenen Fahrzeugs, eine Batterie des elektrisch angetriebenen Fahrzeugs an einer in Fig. 1 nicht dargestellten externen Ladestation mit elektrischer Energie zu laden.

Hierzu weist die elektrische Ladevorrichtung 100 eine Ladesteckdose 101 auf, welche in einer Öffnung 103 der Karosserie 105 des elektrisch angetriebenen Fahrzeugs angeordnet ist, wobei die Ladesteckdose 101 mit einem in Fig. 1 nicht dargestellten Ladestecker der externen Ladestation verbindbar ist, insbesondere über ein Ladekabel, um eine Batterie des elektrisch angetriebenen Fahrzeugs mit elektrischer Energie zu laden.

Die Ladesteckdose 101 weist einen Header 101-1 und einen Aktuator 101-2, wobei der Aktuator 101-2 mit dem Header 101-1 durch einen PIN 101-3 verbunden ist.

Um die Öffnung 103 der Karosserie 105 zu verschließen, und die in der Öffnung 103 angeordnete Ladesteckdose 101 zu schützen, insbesondere vor Witterungseinflüssen zu schützen, weist die elektrische Ladevorrichtung 100 einen Ladedeckel 107 auf, welcher bewegbar, insbesondere dreh- und/oder schwenkbar, gelagert an der Karosserie 105 befestigt und ausgebildet ist, die Öffnung 103 der Karosserie 105 zu verschließen. In der Fig. 1 ist der Ladedeckel 107 in einer Verschlussposition gezeigt, um die Öffnung 103 der Karosserie 105 zu verschließen.

Der Ladedeckel 107 weist insbesondere einen Scharnierabschnitt 109 auf, welcher bewegbar, insbesondere dreh- und/oder schwenkbar, gelagert an der Karosserie 105 befestigt, und durch eine Bewegung, insbesondere durch einen Schwenk, den Ladedeckel 107 zwischen der in Fig. 1 dargestellten Verschlussposition und einer Öffnungsposition, um dem Nutzer einen Zugang zu der Öffnung 103 der Karosserie 105 zu ermöglichen, überführt werden kann.

Hierbei weist der Scharnierabschnitt 109 insbesondere einen Befestigungsbereich 109-1, insbesondere einen geraden Befestigungsbereich 109-1 auf, welcher mit der Karosserie 105 bewegbar verbunden ist, und die bewegbare, insbesondere schwenkbare Lagerung des Ladedeckels 107 sicherstellt.

Der Scharnierabschnitt 109 weist ferner einen gekrümmten Verbindungsbereich 109-2 auf, welcher den Befestigungsbereich 109-1 mit einem Verschlussabschnitt 111 des Ladedeckels 107 verbindet. Der Verschlussabschnitt 111 ist ausgebildet, in der in Fig. 1 dargestellten Verschlussposition des Ladedeckels 107 die Öffnung 103 zu verschließen. Insbesondere ist der Verschlussabschnitt 111 plattenförmig ausgebildet.

Der Scharnierabschnitt 109, insbesondere der gekrümmte Verbindungsbereich 109-2, ist durch eine Scharnieröffnung 105-1 der Karosserie 105 geführt, um die Bewegbarkeit des Scharnierabschnitts 109 sicherzustellen.

Die elektrische Ladevorrichtung 100 weist ferner zumindest ein Heizelement 113 auf, welches an dem Ladedeckel 107 angeordnet und ausgebildet ist, den Ladedeckel 107 zu erwärmen.

Durch das zumindest eine Heizelement 113 wird der technische Vorteil erreicht, dass durch die Wärmezufuhr von dem Heizelement 113 zu dem Ladedeckel 107 ein bei niedrigen Außentemperaturen eingefrorener Ladedeckel 107 wirksam abgetaut werden kann, so dass auch bei entsprechenden niedrigen Außentemperaturen der Ladedeckel 107 durch den Nutzer des Fahrzeugs wirksam geöffnet werden kann, um den Ladestecker der externen Ladestation elektrisch mit der Ladesteckdose 101 zu verbinden, um das elektrisch angetriebene Fahrzeug zu laden.

Das zumindest eine Heizelement 113 umfasst insbesondere ein einziges Heizelement 113 oder eine Mehrzahl von Heizelementen 113.

In der Fig. 1 ist eine Mehrzahl von Heizelementen 113 dargestellt, welche an unterschiedlichen Positionen des Ladedeckels 107 angeordnet sind. Im Rahmen des Ausführungsbeispiels ist es jedoch ausreichend, wenn zumindest ein einziges Heizelement 113 der Mehrzahl von Heizelementen 113 vorhanden ist.

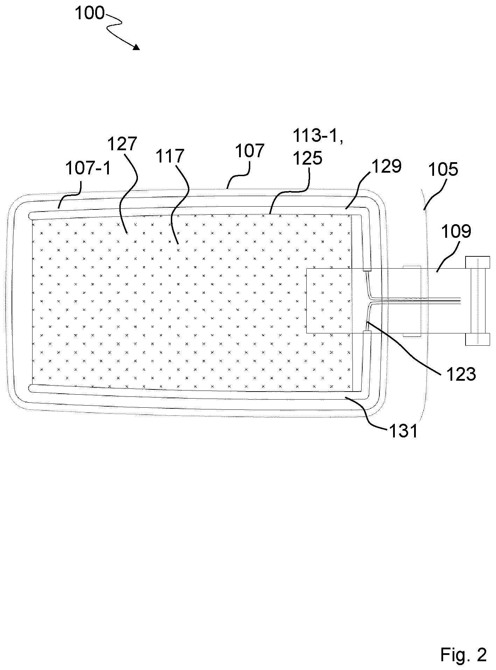

Das in der Fig. 1 dargestellte erste Heizelement 113-1 ist an einer der Ladesteckdose 101 zugewandten Deckelinnenseite 107-1 des Ladedeckels 107 angeordnet. Insbesondere umfasst das erste Heizelement 113-1 ein elektrisch leitfähiges Kunststoffmaterial 125, welches ein elektrisch nichtleitfähiges Kunststoffträgermaterial, insbesondere Kunststoffgranulat, aufweist, in welches elektrisch leitfähige Partikel 127 eingebracht sind. Für eine detaillierte Darstellung des ersten Heizelements 113-1 wird auf die nachfolgende Fig. 2 verwiesen.

Das in der Fig. 1 dargestellte zweite Heizelement 113-2 ist innerhalb des Ladedeckels 107 angeordnet, wobei das zweite Heizelement 113-2 insbesondere innerhalb des Ladedeckels 107 mittig ausgerichtet ist. Hierbei ist das zweite Heizelement 113-2 insbesondere außenseitig durch ein Außenblech 115 des Ladedeckels 107 abgedeckt und innenseitig durch ein Trägermaterial 117 des Ladedeckels 107 abgedeckt.

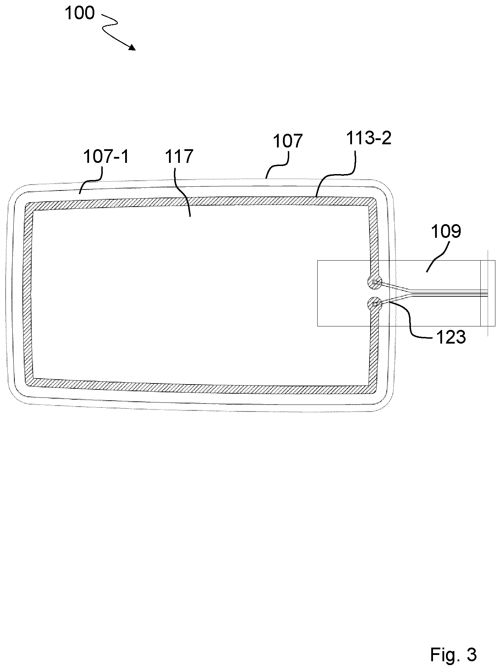

Das zweite Heizelement 113-2 umfasst insbesondere einen Heizkörper, insbesondere einen Heizdraht, Heizblech, Heizgitter oder eine Heizfolie, welche mit dem Trägermaterial 117 verbunden ist, und insbesondere in dem Trägermaterial 117 eingebettet ist. Für eine detaillierte Darstellung des zweiten Heizelements 113-2 wird auf die nachfolgende Fig. 3 verwiesen.

Das in der Fig. 1 dargestellte dritte Heizelement 113-3 ist an einem Dichtelement 119 der elektrischen Ladevorrichtung 100 angeordnet. Hierbei ist das Dichtelement 119 an der der Ladesteckdose 101 zugewandten Deckelinnenseite 107-1 des Ladedeckels 107 angeordnet, insbesondere aufgeklebt, ist, um eine wirksame Abdichtung zwischen dem Ladedeckel 107 und der Karosserie 105 sicherzustellen.

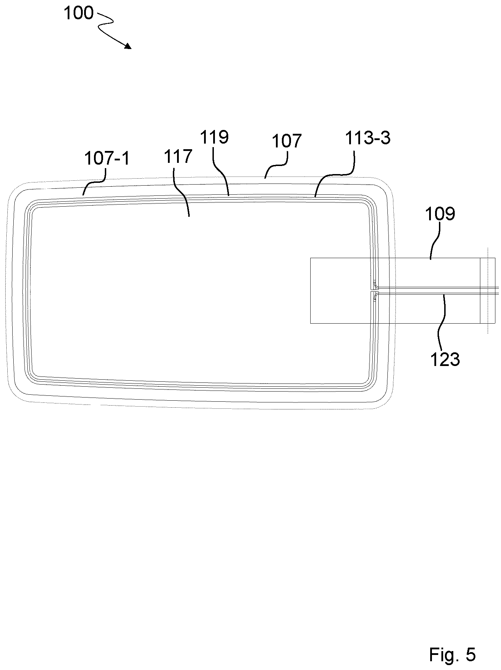

Das Dichtelement 119 und das an dem Dichtelement 119 angeordnete dritte Heizelement 113-3 umläuft die Deckelinnenseite 107-1 des Ladedeckels 107 insbesondere vollständig. Insbesondere umfasst das dritte Heizelement 113-3 eine Heizlitze, welche innerhalb des Dichtelements 119 angeordnet ist. Für weitere Informationen zum dritten Heizelement 113-3 wird auf die nachfolgende Fig. 5 verwiesen.

Das in der Fig. 1 dargestellte vierte Heizelement 113-4 ist an einer Deckelverriegelung 121 des Ladedeckels 107 angeordnet. Die in Fig. 1 lediglich schematisch dargestellte Deckelverriegelung 121 ist an einer der Ladesteckdose 101 zugewandten Deckelinnenseite 107-1 des Ladedeckels 107 angeordnet und ist ausgebildet, den Ladedeckel 107 im geschlossenen Zustand zu verriegeln. Das vierte Heizelement 113-4 verhindert insbesondere ein Einfrieren der Deckelverriegelung 121.

Das in der Fig. 1 dargestellte fünfte Heizelement 113-5 ist an dem Scharnierabschnitt 109 des Ladedeckels 107 angeordnet. Der Scharnierabschnitt 109 ist bewegbar gelagert, insbesondere drehbar und/oder schwenkbar gelagert, an der Karosserie 105 befestigt und durch eine Scharnieröffnung 105-1 der Karosserie 105 geführt. Hierbei ist das fünfte Heizelement 113-5 an dem Scharnierabschnitt 109 in der Nähe der Scharnieröffnung 105-1 angeordnet. Insbesondere weist das fünfte Heizelement 113-5 einen Außenbereich auf, welcher an der Scharnieröffnung 105-1 anliegt, und weist das fünfte Heizelement 113-5 eine Heizelementöffnung auf, durch welche der gekrümmte Verbindungsbereich geführt ist. Insbesondere weist das fünfte Heizelement 113-5 eine U-Form auf. Das fünfte Heizelement 113-5 verhindert ein Festfrieren des Scharnierabschnitts 109.

Das fünfte Heizelement 113-5 ist durch eine elektrische Energieverbindung 123 mit einer in Fig. 1 nicht dargestellten elektrischen Energieversorgung des elektrisch angetriebenen Fahrzeugs zum Bereitstellen von elektrischer Energie elektrisch verbunden ist. Hierbei ist ein erster Verbindungsabschnitt 123-1 der elektrischen Energieverbindung 123 mit der Ladesteckdose 101 elektrisch verbunden und verbindet ein zweiter Verbindungsabschnitt 123-2 der elektrischen Energieverbindung 123 die Ladesteckdose 101 mit der elektrischen Energieversorgung des elektrisch angetriebenen Fahrzeugs.

Auch wenn dies in Fig. 1 nicht dargestellt ist, können neben dem fünften Heizelement 113-5 auch das erste, zweite, dritte und vierte Heizelement 113-1, 113-2, 113-3 und 113-4 jeweils durch eine elektrische Energieverbindung 123 mit der elektrischen Energieversorgung des elektrisch angetriebenen Fahrzeugs verbunden werden, entweder direkt oder indirekt über die Ladesteckdose 101. Hierbei kann die elektrische Energieverbindung 123 zu dem ersten, zweiten, dritten und vierten Heizelement 113-1, 113-2, 113-3 und 113-4 auch insbesondere entlang des Scharnierabschnitts 109 des Ladedeckels 107 geführt sein.

Fig. 2 zeigt eine schematische Darstellung eines an der Deckelinnenseite des Ladedeckels der in Fig. 1 dargestellten elektrischen Ladevorrichtung angeordneten ersten Heizelements.

Die in Fig. 2 dargestellte elektrische Ladevorrichtung 100 entspricht der in Fig. 1 dargestellten elektrischen Ladevorrichtung 100, bis darauf, dass lediglich ein Ausschnitt gezeigt ist.

An der Deckelinnenseite 107-1 des Ladedeckels 107 ist das erste Heizelement 113-1 angeordnet, welches ein elektrisch leitfähiges Kunststoffmaterial 125 aufweist. Das elektrisch leitfähige Kunststoffmaterial 125 umfasst ein elektrisch nicht leitfähiges Trägermaterial 117 aufweist, in welches elektrisch leitfähige Partikel 127 als Heizkörper eingebracht sind.

Ein in dem elektrisch leitfähigen Kunststoffmaterial 125 integriertes erstes Kontaktelement 129 und zweites Kontaktelement 131 stellt eine elektrisch leitfähige Verbindung zu einer elektrischen Energieverbindung 123 bereit. Die elektrische Energieverbindung 123 ist entlang des Scharnierabschnitts 109 des Ladedeckels 107 geführt und kontaktiert eine elektrische Energieversorgung des Fahrzeugs.

Fig. 3 zeigt eine schematische Darstellung eines an einer Deckelinnenseite des Ladedeckels der in Fig. 1 dargestellten elektrischen Ladevorrichtung angeordneten zweiten Heizelements.

Die in Fig. 3 dargestellte elektrische Ladevorrichtung 100 entspricht der in Fig. 1 dargestellten elektrischen Ladevorrichtung 100, bis darauf, dass lediglich ein Ausschnitt gezeigt ist.

Das in der Fig. 3 dargestellte zweite Heizelement 113-2 ist innerhalb des Ladedeckels 107 angeordnet, wobei das zweite Heizelement 113-2 insbesondere innerhalb des Ladedeckels 107 mittig ausgerichtet ist. Hierbei ist das zweite Heizelement 113-2 insbesondere außenseitig durch das Außenblech 115 des Ladedeckels 107 abgedeckt und innenseitig durch ein Trägermaterial 117 des Ladedeckels 107 abgedeckt.

Das zweite Heizelement 113-2 umfasst insbesondere einen Heizkörper, insbesondere Heizdraht oder Heizfolie, welcher mit dem Trägermaterial 117 verbunden ist, insbesondere wie in der Fig. 1 dargestellt, in das Trägermaterial 117 eingebettet ist. Alternativ kann das zweite Heizelement 113-2 auch auf dem Trägermaterial 117 angeordnet, insbesondere aufgeklebt sein.

Hierbei kontaktiert eine elektrische Energieverbindung 123 das zweite Heizelement 113-2, wobei die elektrische Energieverbindung 123 entlang des Scharnierabschnitts 109 des Ladedeckels 107 geführt ist.

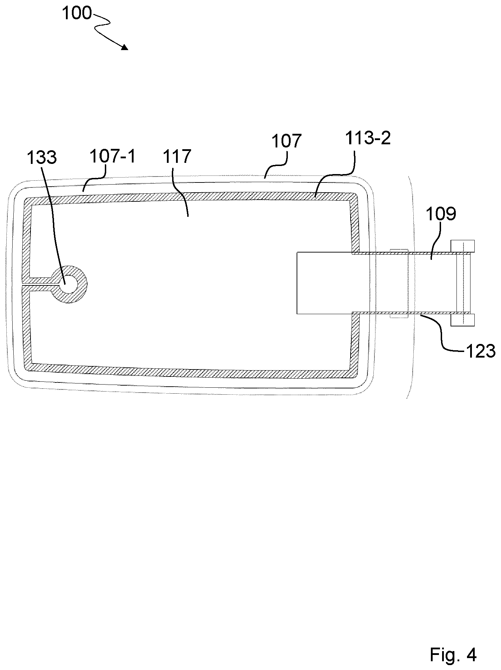

Fig. 4 zeigt eine schematische Darstellung eines an einer Deckelinnenseite des Ladedeckels der in Fig. 1 dargestellten elektrischen Ladevorrichtung angeordneten zweiten Heizelements gemäß einem weiteren Ausführungsbeispiel.

Die in Fig. 4 dargestellte elektrische Ladevorrichtung 100 entspricht der in Fig. 3 dargestellten elektrischen Ladevorrichtung 100, bis darauf, dass das zweite Heizelement 113-2 eine Aussparung 133 für die in Fig. 4 nicht dargestellte Deckelverriegelung 121 aufweist, so dass auch im Bereich der Deckelverriegelung 121 eine wirksame Erwärmung stattfinden kann.

Fig. 5 zeigt eine schematische Darstellung eines an einer Deckelinnenseite des Ladedeckels der in Fig. 1 dargestellten elektrischen Ladevorrichtung angeordneten dritten Heizelements.

Die in Fig. 5 dargestellte elektrische Ladevorrichtung 100 entspricht der in Fig. 1 dargestellten elektrischen Ladevorrichtung 100, bis darauf, dass lediglich ein Ausschnitt gezeigt ist.

Das in der Fig. 5 dargestellte dritte Heizelement 113-3 ist an einem Dichtelement 119 der elektrischen Ladevorrichtung 100 angeordnet. Hierbei ist das Dichtelement 119 an der der Ladesteckdose 101 zugewandten Deckelinnenseite 107-1 des Ladedeckels 107 angeordnet, insbesondere aufgeklebt, um eine wirksame Abdichtung zwischen dem Ladedeckel 107 und der Karosserie 105 sicherzustellen.

Das Dichtelement 119 und das an dem Dichtelement 119 angeordnete dritte Heizelement 113-3 umläuft die Deckelinnenseite 107-1 des Ladedeckels 107 insbesondere vollständig. Insbesondere umfasst das dritte Heizelement 113-3 eine Heizlitze, welche innerhalb des Dichtelements 119 angeordnet ist.

Hierbei kontaktiert eine elektrische Energieverbindung 123 das dritte Heizelement 113-3, wobei die elektrische Energieverbindung 123 entlang des Scharnierabschnitts 109 des Ladedeckels 107 geführt ist.

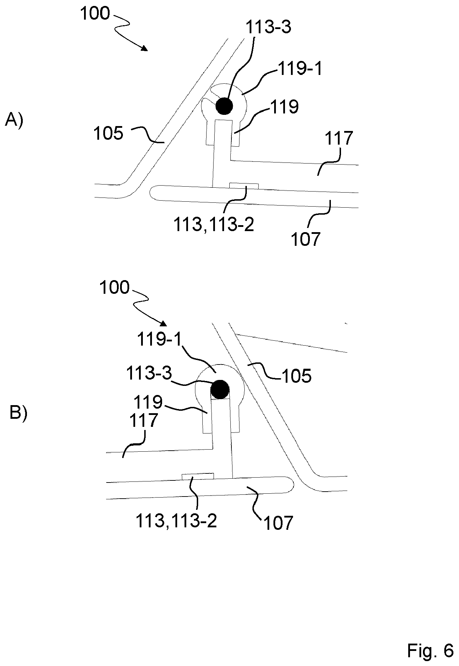

Die Figuren 6A und 6B zeigen alternative Darstellungen des in Fig. 5 dargestellten dritten Heizelements.

Wie aus der Fig. 6A und 6B entnommen werden kann, ist das dritte Heizelement 113-3 in einer Dichtlippe 119-1 des Dichtelements 119, insbesondere zumindest teilweise durch das Dichtelement 119 umschlossen, aufgenommen. Das Dichtelement 119 stellt eine wirksame Abdichtung zwischen dem Ladedeckel 107 und der Karosserie 105 sicher.

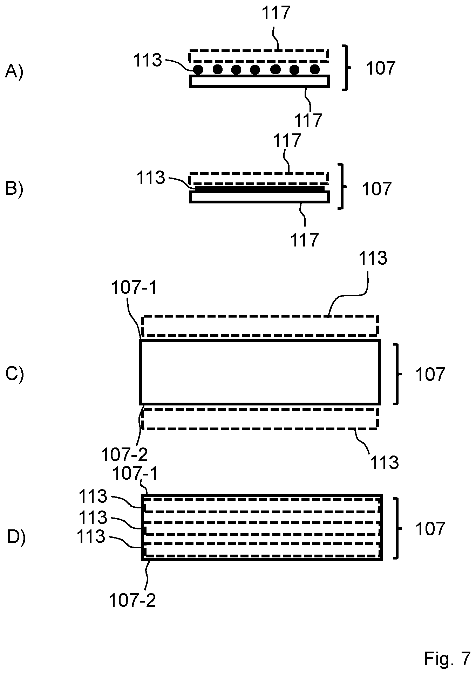

Die Figuren 7A bis 7D zeigen schematische Darstellungen von Heizelementen einer elektrischen Ladevorrichtung gemäß weiterer Ausführungsbeispiele.

In den Figuren 7A, 7B, 7C und 7D sind lediglich an dem Ladedeckel 107 angeordnete Heizelemente 113 schematisch dargestellt.

Das in der Fig. 7A dargestellte Heizelement 113 umfasst eine Mehrzahl von Heizlitzen, welche auf einer Trägerschicht 117 des Ladedeckels 107 angeordnet, insbesondere aufgeklebt sind. Optional kann das in der Fig. 7A dargestellte Heizelement 113 durch die Trägerschicht 117 abgedeckt werden.

Das in der Fig. 7B dargestellte Heizelement 113 umfasst eine Heizfolie, welche auf einer Trägerschicht 117 des Ladedeckels 107 angeordnet, insbesondere aufgeklebt sind. Optional kann das in der Fig. 7AB dargestellte Heizelement 113 durch die Trägerschicht 117 abgedeckt werden.

Das in der Fig. 7C dargestellte Heizelement 113 kann auf einer der Ladesteckdose 101 zugewandten Deckelinnenseite 107-1 des Ladedeckels 107 und/oder auf einer der Ladesteckdose 101 abgewandten Deckelaußenseite 107-2 des Ladedeckels 107 angeordnet sein.

Das in der Fig. 7D dargestellte Heizelement 113 ist innerhalb des Ladedeckels 107 angeordnet. Insbesondere ist das Heizelement 113 mittig, und/oder in einem der Ladesteckdose 101 zugewandten Bereich des Ladedeckels 107 und/oder in einem der Ladesteckdose 101 abgewandten Bereich des Ladedeckels 107 angeordnet.

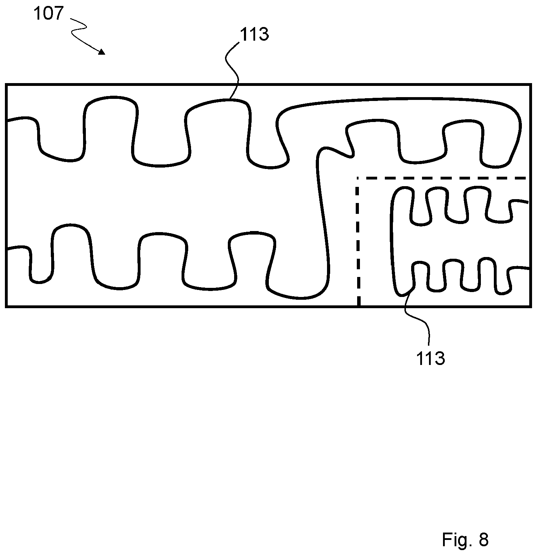

Fig. 8 zeigt eine schematische Darstellung von Heizelementen an einem Ladedeckel einer elektrischen Ladevorrichtung gemäß einem weiteren Ausführungsbeispiel.

In dem in Fig. 8 lediglich schematisch gezeigten Ladedeckel 107 sind lediglich unterschiedliche Heizelement 113 schematisch dargestellt, welche in unterschiedlichen Bereichen des Ladedeckels 107 angeordnet sind, um die unterschiedlichen Bereiche des Ladedeckels 107 unterschiedlich zu beheizen.

Die Figuren sind lediglich schematische Darstellungen und dienen nur der Erläuterung der Erfindung. Gleiche oder gleichwirkende Elemente sind durchgängig mit den gleichen Bezugszeichen versehen.

### BEZUGSZEICHENLISTE

- 100: Elektrische Ladevorrichtung
- 101: Ladesteckdose
- 101-1: Header
- 101-2: Aktuator
- 101-3: Pin
- 103: Öffnung
- 105: Karosserie
- 105-1: Scharnieröffnung
- 107: Ladedeckel
- 107-1: Deckelinnenseite
- 109: Scharnierabschnitt
- 109-1: Befestigungsbereich
- 109-2: Gekrümmter Verbindungsbereich
- 111: Verschlussabschnitt
- 113: Heizelement
- 113-1: Erstes Heizelement
- 113-2: Zweites Heizelement
- 113-3: Drittes Heizelement
- 113-4: Viertes Heizelement
- 113-5: Fünftes Heizelement
- 115: Außenblech des Ladedeckels
- 117: Trägermaterial des Ladedeckels
- 119: Dichtelement
- 121: Deckelverriegelung
- 123: Elektrische Energieverbindung
- 123-1: Erster Verbindungsabschnitt
- 123-3: Zweiter Verbindungsabschnitt
- 125: Elektrisch leitfähiges Kunststoffmaterial
- 127: Elektrisch leitfähige Partikel
- 129: Erstes Kontaktelement
- 131: Zweites Kontaktelement
- 133: Aussparung

## Patentansprüche

1. Elektrische Ladevorrichtung (100) eines elektrisch angetriebenen Fahrzeugs, mit:
einer Ladesteckdose (101), welche mit einem Ladestecker (137) einer externen Ladestation elektrisch verbindbar ist, um eine Batterie des elektrisch angetriebenen Fahrzeugs mit elektrischer Energie zu laden, wobei die Ladesteckdose (101) in einer Öffnung (103) einer Karosserie (105) des elektrisch angetriebenen Fahrzeugs angeordnet ist,
einem Ladedeckel (107), welcher bewegbar gelagert an der Karosserie (105) befestigt und ausgebildet ist, die Öffnung (103) der Karosserie (105) zu verschließen, und
zumindest einem Heizelement (113, 113-1, 113-2, 113-3, 113-4, 113-5), welches an dem Ladedeckel (107) angeordnet und ausgebildet ist den Ladedeckel (107) zu erwärmen.

2. Elektrische Ladevorrichtung (100) nach Anspruch 1, wobei das zumindest eine Heizelement (113, 113-1, 113-2, 113-3, 113-4, 113-5) an einer der Ladesteckdose (101) zugewandten Deckelinnenseite (107-1) des Ladedeckels (107) angeordnet, insbesondere aufgeklebt, ist.

3. Elektrische Ladevorrichtung (100) nach Anspruch 1 oder 2, wobei das zumindest eine Heizelement (113, 113-1, 113-2, 113-3, 113-4, 113-5) innerhalb des Ladedeckels (107) angeordnet ist, insbesondere mittig, und/oder in einem der Ladesteckdose (101) zugewandten Bereich des Ladedeckels (107) und/oder in einem der Ladesteckdose (101) abgewandten Bereich des Ladedeckels (107).

4. Elektrische Ladevorrichtung (100) nach einem der vorangehenden Ansprüche, wobei die elektrische Ladevorrichtung (100) einen Temperatursensor aufweist, welcher ausgebildet ist, eine Temperatur des Ladedeckels (107) zu erfassen, wobei der Temperatursensor steuerungstechnisch mit einer Steuerung des elektrisch angetriebenen Fahrzeugs, insbesondere mit einer Steuerung der elektrischen Ladevorrichtung (100), verbunden ist, wobei die Steuerung steuerungstechnisch mit dem zumindest einen Heizelement (113, 113-1, 113-2, 113-3, 113-4, 113-5) verbunden und ausgebildet ist, das zumindest eine Heizelement (113, 113-1, 113-2, 113-3, 113-4, 113-5) zum Erwärmen des Ladedeckels (107) in Abhängigkeit der erfassten Temperatur zu aktivieren.

5. Elektrische Ladevorrichtung (100) nach einem der vorangehenden Ansprüche, wobei das zumindest eine Heizelement (113, 113-1, 113-2, 113-3, 113-4, 113-5) als ein elektrisches Heizelement (113, 113-1, 113-2, 113-3, 113-4, 113-5) ausgebildet ist, wobei das elektrische Heizelement (113, 113-1, 113-2, 113-3, 113-4, 113-5) mit einer elektrischen Energieversorgung des elektrisch angetriebenen Fahrzeugs, durch eine elektrische Energieverbindung (123) zum Bereitstellen von elektrischer Energie elektrisch verbunden ist, wobei die elektrische Energieverbindung (123) insbesondere entlang eines Scharnierabschnitts (109) des Ladedeckels (107) und/oder zumindest abschnittsweise zwischen dem elektrischen Heizelement (113, 113-1, 113-2, 113-3, 113-4, 113-5) und der Ladesteckdose (101) geführt ist.

6. Elektrische Ladevorrichtung (100) nach einem der vorangehenden Ansprüche, wobei das zumindest eine Heizelement (113, 113-1, 113-2, 113-3, 113-4, 113-5) ein Trägermaterial (117) und einen Heizkörper, insbesondere Heizdraht oder Heizfolie, aufweist, welcher mit dem Trägermaterial (117) verbunden ist, wobei der Heizkörper insbesondere in dem Trägermaterial (117) eingebettet oder auf dem Trägermaterial (117) angeordnet, insbesondere aufgeklebt, ist.

7. Elektrische Ladevorrichtung (100) nach einem der vorangehenden Ansprüche, wobei das zumindest eine Heizelement (113, 113-1, 113-2, 113-3, 113-4, 113-5) ein elektrisch leitfähiges Kunststoffmaterial (125) umfasst, welches ein elektrisch nichtleitfähiges Kunststoffträgermaterial (117) aufweist, in welches elektrisch leitfähige Partikel (127) eingebracht sind.

8. Elektrische Ladevorrichtung (100) nach einem der vorangehenden Ansprüche, wobei der Ladedeckel (107) einen Scharnierabschnitt (109) aufweist, welcher bewegbar gelagert, insbesondere drehbar und/oder schwenkbar gelagert, an der Karosserie (105) befestigt ist, und wobei der Ladedeckel (107) einen Verschlussabschnitt (111) aufweist, welcher geformt ist, um die Öffnung (103) zu verschließen, wobei das zumindest eine Heizelement (113, 113-1, 113-2, 113-3, 113-4, 113-5) insbesondere an dem Verschlussabschnitt (111) und/oder an dem Scharnierabschnitt (109) angeordnet ist.

9. Elektrische Ladevorrichtung (100) nach Anspruch 8, wobei der Scharnierabschnitt (109) durch eine Scharnieröffnung (103) der Karosserie (105) geführt ist, wobei das zumindest eine Heizelement (113, 113-5) insbesondere an dem Scharnierabschnitt (109) in der Nähe der Scharnieröffnung (105-1) angeordnet ist.

10. Elektrische Ladevorrichtung (100) nach einem der vorangehenden Ansprüche, wobei die elektrische Ladevorrichtung (100) ein Dichtelement (119) aufweist, welches an einer der Ladesteckdose (101) zugewandten Deckelinnenseite (107-1) des Ladedeckels (107) angeordnet, insbesondere aufgeklebt, ist, um eine wirksame Abdichtung zwischen dem Ladedeckel (107) und der Karosserie (105) sicherzustellen, wobei insbesondere das zumindest eine Heizelement (113, 113-3) an dem Dichtelement (119) angeordnet ist.

11. Elektrische Ladevorrichtung (100) nach einem der vorangehenden Ansprüche, wobei die elektrische Ladevorrichtung (100) eine Deckelverriegelung (121) aufweist, welche an einer der Ladesteckdose (101) zugewandten Deckelinnenseite (107-1) des Ladedeckels (107) angeordnet und ausgebildet ist, den Ladedeckel (107) im geschlossenen Zustand zu verriegeln, wobei insbesondere das zumindest eine Heizelement (113, 113-4) an dem Deckelverriegelung (121) angeordnet ist.

12. Elektrische Ladevorrichtung (100) nach einem der vorangehenden Ansprüche, ferner umfassend ein Lichtabgabeelement, welches an dem Ladedeckel (107) angeordnet und ausgebildet ist, eine wirksame Beleuchtung einer Umgebung der elektrischen Ladevorrichtung (100) sicherzustellen.

13. Elektrische Ladevorrichtung (100) nach Anspruch 12, wobei das Lichtabgabeelement und das zumindest eine Heizelement (113, 113-1, 113-2, 113-3, 113-4, 113-5) mit einer Steuerung des elektrisch angetriebenen Fahrzeugs, insbesondere mit einer Steuerung der elektrischen Ladevorrichtung (100), steuerungstechnisch verbindbar sind, wobei die Steuerung insbesondere ausgebildet ist, das Lichtabgabeelement in Abhängigkeit der Aktivierung des Heizelements (113, 113-1, 113-2, 113-3, 113-4, 113-5) zu steuern.

14. Elektrische Ladevorrichtung (100) nach Anspruch 12 oder 13, wobei das Lichtabgabeelement einen Lichtauskoppelbereich umfasst, welcher an dem Ladedeckel (107), insbesondere an dem Verschlussabschnitt (111), angeordnet ist, wobei der Lichtauskoppelbereich durch einen Lichtleiter mit einer Lichtquelle lichtleitend verbunden ist, um von der Lichtquelle emittiertes Licht durch den Lichtleiter zu dem Lichtauskoppelbereich zu leiten, wobei der Lichtauskoppelbereich ausgebildet ist, die Umgebung der elektrischen Ladevorrichtung (100), insbesondere die Ladesteckdose (101), zu beleuchten.

15. Elektrische Ladevorrichtung (100) nach Anspruch 12, 13 oder 14, wobei das Lichtabgabeelement, insbesondere der Lichtauskoppelbereich, und das zumindest eine Heizelement (113, 113-1, 113-2, 113-3, 113-4, 113-5) einstückig ausgebildet sind.
